# EUROPEAN PATENT APPLICATION

(11) **EP 2 056 577 A1**
(43) Date of publication of application: **06.05.2009**
(21) Application number: 08102659.3
(22) Date of filing: 17.03.2008
(51) Int. Cl.: H04M 3/51

(54) **Method for providing a satisfaction rating for an agent's performance in a call center**

(30) Priority: 30.10.2007 US 981970
(71) Applicant: Mitel Networks Corporation, Ottawa, Ontario K2K 2W7 (CA)
(72) Inventor: Erb, Paul Andrew, Ontario K1N 6M5 (CA)
(74) Representative: Pisani, Diana Jean

(57) **Abstract**

A method and apparatus for providing a satisfaction rating for a call center agent, call data associated with the agent's interaction on the call is captured, the call data comprising a satisfaction level associated with the interaction as well as caller ID, Agent, time, length of call, time on hold etc. The call data is logged for follow-up by a handling point specialized in dealing with satisfaction levels, if the satisfaction level goes beyond a threshold satisfaction level, thus if the call is rated particularly badly or extremely well rated a review of the call can be made to improve service in the future or to learn what the customer particularly appreciates.

## Description

### Field of Invention

The specification relates generally to call centers, and specifically to a method and apparatus for managing a call.

### Background of the Invention

On occasion, a contact center employee may be less than courteous, or even offensive, with a calling customer. They can do so without concern of reprisal by the customer as the contact center employee is usually not identifiable by the customer. Furthermore, unless the call is recorded and further reviewed for quality (a practice in some contact centers), reprimand by the contact center may also not be forthcoming. Lack of courtesy can range from being deliberately unhelpful to verbally abusive language to transferring or hanging up on the customer. The latter can be especially annoying to the customer when they have been transferred several times to reach the appropriate person and/or have been waiting in a hold queue for a prolonged period.

The calling customer has very limited recourse because they generally have no information about who the contact center employee was. One response that customer may have is to decide not to deal with the contact center again. This may lead to lost revenues and, depending on frequency, bad customer relations for the company served by the call center. Another response is that the customer may decide to make a complaint to the company, however, limited action may be taken to resolve the complaint, and further the contact center employee who was less than courteous may not be identifiable. Even the practice of recording calls for quality may not lead to an identification of the contact center employee as the recording is usually done randomly. While it may be possible to identify the offending contact center employee given the time of the call and the customers phone number, significant effort may be expended to make the identification.

### Summary of the Invention

A first broad aspect of an embodiment seeks to provide a method of managing a call, the method comprising: capturing call data associated with an interaction on the call, the call data comprising a satisfaction level associated with the interaction; logging the call data for follow-up by a handling point specialized in dealing with satisfaction levels, if the satisfaction level goes beyond a threshold satisfaction level.

In some embodiments of the first broad aspect, the call is between a first user and at least one second user, and the call data further comprises an identifier of the first user and an identifier of the at least one second user. In some of these embodiments, the method further comprises recording the call and wherein the call data further comprises at least one of the recording of the call and a link to the recording of the call. In other of these embodiments, the identifier of the first user comprises a network identifier associated with the first user, the identifier of the at least one second user comprises an identifier associated with an employee of a contact center. In further embodiments, the call data further comprises at least one of time that the call has spent in hold queues and a number of transfers that has occurred during the call.

In other embodiments of the first broad aspect, the logging comprises saving the call data.

In further embodiments of the first broad aspect, the follow-up comprises collecting of further data associated the satisfaction level. In some of these embodiments, the logging comprises forwarding the call data to a handling point, and the collecting comprises placing a second call to a network identifier associated with the call. In other of these embodiments, the logging comprises redirecting the call to a handling point, and the follow-up comprises speaking to a user associated with the call. In yet further embodiments, the logging comprises bridging the call with a handling point, and the follow-up comprises speaking to at least one user associated with the call.

In yet further embodiments of the first broad aspect, the satisfaction level goes beyond a threshold satisfaction level when an employee of an entity engaged in the call hangs up prior to a customer engaged in the call. In some of these embodiments, the follow-up comprises redirecting a new call from a network address associated with the call to a handling point, if the call is terminated when the employee hangs up. In these embodiments, the redirecting a new call from a network address associated with the call to the handling point occurs only if the new call arrives within a specified time period after the call is terminated. In some embodiments, the follow-up comprises initiating a new call to a network address associated with the call, if the call is terminated when the employee hangs up

In other embodiments of the first broad aspect, the satisfaction level comprises an indicator of a satisfaction level of a user associated with the call. In some of these embodiments, the indicator comprises at least one of a DTMF tone and a verbal indicator. In other embodiments, the method further comprises providing the user with instructions on how the user may provide the indicator.

In other embodiments of the first broad aspect, the method further comprises collecting further data associated with the satisfaction level.

In yet other embodiments of the first broad aspect, the method further comprises routing the call data through a handling point based on the satisfaction level.

A second broad aspect of an embodiment seeks to provide a switch for managing a call, comprising: a routing unit for routing the call; a call answer unit for answering the call; and a call data capture unit for: capturing call data associated with an interaction on the call, the call data comprising a satisfaction level associated with the interaction; and logging the call data for follow-up by a handling point specialized in dealing with satisfaction levels, if the satisfaction level goes beyond a threshold satisfaction level.

### Brief Description of the Drawings

Embodiments are described with reference to the following figures, in which:

Fig. 1 depicts a system for managing a call, according to a non-limiting embodiment; and

Fig. 2 depicts a method for managing a call, according to a non-limiting embodiment.

### Detailed Description

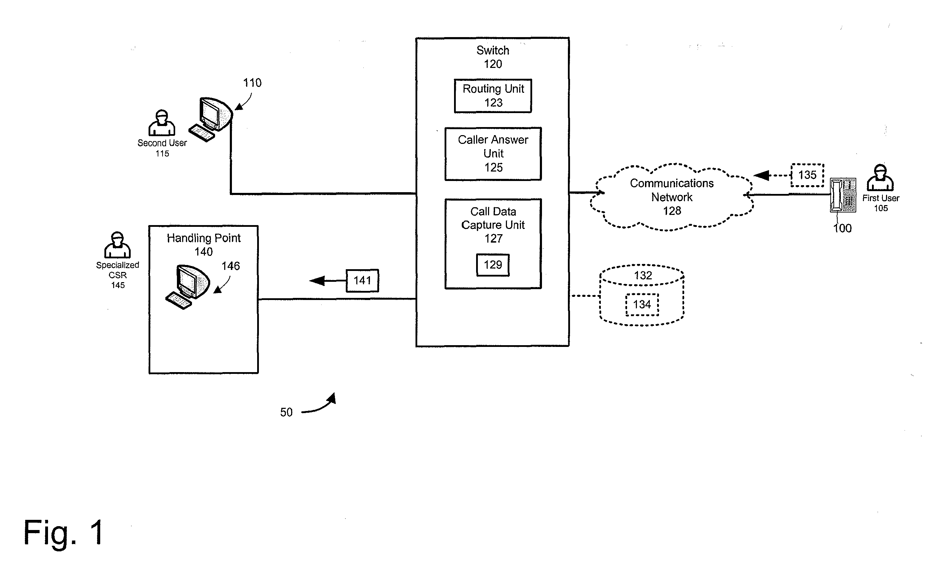

Figure 1 depicts a system 50 for managing a call, and specifically a call between a communication device 100 associated with a first user 105 and a communication device 110 associated with a second user 115. In general, in some embodiments, the first user 105 may comprise a customer or potential customer of an entity (e.g. a business, a contact center, etc.), and the second user 115 may comprise an employee associated with the entity (e.g. an employee of a business or a contact center engaged in the call). However, in other embodiments, the first user 105 and the second user 115 may both be employees of the entity (e.g. the first user 105 being an employee with a work related question, and the second user 115 being a human resources employee, for example). In further embodiments, the first user 105 and the second user 105 may be speaking to each other within a building whose communications are controlled by the switch 120, for example a hotel or a convention center.

The call is managed via the switch 120, which comprises logical and physical components for managing calls, which will be described hereafter with reference to embodiments. The switch 120 comprises a routing unit 123 for routing calls, including incoming calls, outgoing calls and internal calls. In some embodiments, the switch 120 is connected to incoming lines via a communications network 128. In these embodiments, the communications network 128 may comprise a switched network (e.g. the PSTN) and/or a packet based network (e.g. the Internet), the switch 120 being enabled for managing calls via the communications network 128, and the routing unit 123 enabled for routing calls to and from the communications network 128. Embodiments described are not limited, however, to whether the calls are packet based or PSTN based.

In a specific non-limiting embodiment, the second user 115 comprises a customer service representative (CSR) of a contact center, and the first user 105 comprises a customer, or a potential customer, engaged in a call to the contact center. The switch 120 manages the contact center's calls including, but not limited to, routing calls to CSR's, managing a hold queue, managing a call queue, and interacting with the user 105 via a caller answer unit 125. In this embodiment, the CSR may be one of a plurality of CSRs (not depicted), and the switch 120 may be connected to a plurality of incoming lines and/or communication networks, the switch 120 managing a plurality of calls and assigning calls to CSRs based on availability or skill level, as known to one of skill in the art. Furthermore, some calls may be calls initiated by the first user 105 (i.e. the customer) to the call center using the communication device 100, while other calls may be calls initiated by the call center to the first user 105. In any event, the switch 120 controls the connection of the communication device 100 to the communication device 110 based on a set of call center rules, as known to one of skill in the art.

In some embodiments, the call answer unit 125 is enabled to monitor the call, including but not limited to providing an initial interaction with the first user 105, and/or monitoring the call while the first user 105 is interacting with the second user 115. In other embodiments, these two functions (i.e. the providing of an initial interaction and monitoring the call) may be performed by separate logical entities. The call answer unit 125 may comprise an interactive voice response (IVR) unit, a DTMF (dual-tone multi frequency) detection unit, or a combination. During an initial interaction with the first user 105, the call answer unit 125 may provide information to the first user 105 regarding: navigating through a series of menus to reach a CSR with a particular skill set or knowledge base; informing the first user 105 of wait times; playing music and/or information while the first user 105 is on hold; and/or other information pertaining to the call. In particular, the call answer unit 125 may provide the first user 105 with information regarding providing an indication of a satisfaction level 135. In some embodiments, the satisfaction level going beyond a threshold satisfaction level may comprise the satisfaction level falling below a threshold satisfaction level. In other embodiments, the satisfaction level going beyond a threshold satisfaction level may comprise the satisfaction level rising above a threshold satisfaction level.

In a non-limiting example, the call answer unit 125 may inform the first user 105 that the first user 105 may provide further data associated with a satisfaction level by providing the indication of a satisfaction level 135. In some embodiments, the indication of a satisfaction level 135 comprises a DTMF tone, which may be provided by the first user 105 pressing a button on the communication device 100. In other embodiments, the indication of a satisfaction level 135 comprises a verbal indication of a satisfaction level 135, which may be provided by the first user 105 by speaking a verbal queue (e.g. "I want to talk to your supervisor") into the communications device 100. Hence, during the call, the call answer unit 125 (and/or a call data capture unit 127, described below) monitors the call to detect if the first user 105 has provided the indication of a satisfaction level 135, either by detecting a DTMF or a verbal queue.

In some embodiments, the indication of a satisfaction level 135 may comprise an indication of offence or annoyance; in other embodiments, the indication of a satisfaction level 135 may comprise an indication of approval or contentment. In some embodiments, the indication of a satisfaction level 135 may comprise a single indicator. In a non-limiting example, general satisfaction may be assumed unless the first user 105 provides an indicator of offence (e.g. by pressing "0"). In another non-limiting example, the first user may provide an indicator of approval (e.g. by pressing "9").

In other embodiments, the indication of a satisfaction level 135 may be one of a plurality of indicators of satisfaction level, each of the plurality of indicators of satisfaction level indicative of a different level of satisfaction. For example, the first user 105 may indicate a level of satisfaction by pressing one of a plurality of buttons on the communications device 100, such as one of the buttons 0-9, each represented by a different DTMF tone, each DTMF tone representing a different indication of a satisfaction level 135. In a specific non-limiting embodiment, the first user 105 may then indicate that they are less than satisfied (e.g. offended or annoyed) by pressing "0", and extremely satisfied by pressing "9".

The switch 120 further comprises the call data capture unit 127 for capturing call data 129. The call data 129 may comprise a network address associated with the first user 105 for identifying and contacting the first user 105 (for example a phone number or IP address of the communication device, an e-mail address of the first user, or a combination), and an identifier of the second user 115 (for example, at least one of a network address of the second user 115, a name of the second user 115, an employee identification number of the second user 115 and the like). The call data 129 may further comprise the length of time that the call has spent in hold queues, a recording of the call, a link to a recording of the call, a time of the call, an identifier of any other users involved in the call (e.g. any other contact center employees involved in the call), the indication of a satisfaction level 135, and the like. In some embodiments, the call data capture unit 127 is further enabled to transmit a trigger 141 to a handling point 140 (described below), if the satisfaction level associated with the call goes beyond a threshold satisfaction level, to indicate that a follow-up to the call is recommended, the follow-up to the call described below. In some of these embodiments, the trigger 141 comprises at least a portion of the call data 129.

In some embodiments, the switch 120 is further coupled to a database 132 for storing at least one call information record 134 comprising information associated with the first user 105. For example, the call information record 134 may comprise at least a portion the call data 129 including, but not limited to, an identifier of the first user 105, at least one network address associated with the first user 105, (e.g. saved in the database 132 as the call data 129 is being collected, or alternatively after the call), a history of prior calls associated with the first user 105, a history of any resolutions associated with the prior calls, an identifier of the second user 115 (e.g. an employee number, a name, and/or an network address of the communication device 110), a call recording, a link to a call recording, or a combination. In some embodiments, a single call information record may store all information associated with the first user 105 that is in the database 132, while in other embodiments a plurality of call information records may store all the information associated with the first user 105 that is in the database 132, for example a separate call information record for each call associated with the first user 105. In these embodiments, each call information record associated with the first user 105 may be linked to at least one other call information record associated with the first user 105.

At a minimum, however, the call information record 134 stores whether the satisfaction level associated with the call have gone beyond a threshold satisfaction level. In some embodiments, a flag may be stored within the call information record 134 as to whether the call goes beyond a threshold satisfaction level. In a non-limiting embodiment, the call information record 134 comprises:

| | |
|---|---|
| Caller ID | 416-555-1212 |
| Employee Name | Bob Smith |
| Time of Call | 18:06, May 25, 2007 |
| Length of Call | 14 Minutes |
| Time Spent in Hold Queues | 2 Hours, 13 Minutes |
| Threshold Satisfaction Level Exceeded | Yes |

In some embodiments, the call information record 134 may further comprise whether the satisfaction level threshold that was exceeded was a positive satisfaction level (for example a high level of satisfaction), or a negative satisfaction level (for example a threshold of offence), as will be described below.

In general, it may be desired to store a history of anything that may affect a satisfaction level associated with the call. Hence, in other embodiments, the call information record 134 may further comprise a history of the number of transfers that has occurred on the call (for example, a record of each time the first user 105 was transferred to a new CSR) and/or a history of the number of hold queues (alternatively an identifier of each hold queue) that the call has been in during the call. In yet further embodiments, the call information record 134 further comprises a record of identifier associated with successive users/CSRs involved in the call (e.g..a network address of each CSR, an employee number associated with each CSR, and the like), if the call proceeds through one or more transfers during handling by the system 50, to allow correlation of a satisfaction level associated with the call to users/CSRs involved in the call.

While in the above embodiments, the call information record 134 is described as being stored at the database 132, in other embodiments, the call information record 134 may be stored in a memory (not depicted) of the switch 120.

Turning now to the handling point 140, the handling point 140 being generally specialized in dealing with satisfaction levels. In some embodiments, the handling point 140 may comprise a computing device for processing call data to determine satisfaction levels associated with calls. For example, the handling point 140 may be enabled to receive and process call data. In other embodiments, the handling point 140 may be enabled to retrieve call data from the database 132, for example by retrieving and processing call information records. In some embodiments, the processing of call data may result in providing alerts of calls that require follow-up to personnel specialized in dealing with satisfaction levels. Such follow-up may comprise calling the first user 105, calling or speaking with the second user 110, or causing the switch 120 to route a new call from the first user 105 to personnel specialized in dealing with satisfaction levels stationed, for example at the handling point 140

In some of these embodiments, the handling point 140 may be a standalone computing device, or the handling point 140 may be a logical component of the switch 120.

In other embodiments, the handling point 140 may comprises a CSR station at which is stationed a specialized CSR 145 specialised in dealing with satisfaction levels. In these embodiments, the handling point 140 comprises a communication device 146 for communicating with the communication device 100 and/or the communication device 110. The communication device 146 may further comprises a display device (as depicted) for displaying at least a portion of the call data 129. In these embodiments, the call data capture unit 127 may be further enabled to either cause the call to be bridged with the handling point 140 or cause the call to be transferred to the handling point 140, if the satisfaction level goes beyond a threshold satisfaction level. For example, in these embodiments, the call data capture unit may be enabled to signal the routing unit 123 to cause the call to be transferred or bridged. Hence, if the satisfaction level goes beyond a threshold satisfaction level, the call data is logged and the specialized CSR 145 may intervene in the call to follow-up with the first user 105 and/or the second user 105, the specialized CSR 145 being specialized in dealing with satisfaction levels. In some of these embodiments, the specialized CSR 145 may be specialized in conflict resolution and/or empowered to offer the first user 105 special incentives to bring the satisfaction level of the first user 105 to an acceptable satisfaction level.

In some embodiments, the handling point 140 may comprise a plurality of CSR stations, each stationed with a specialized CSR. In some of these embodiments, some of the specialized CSR's may be specialized in conflict resolution, while other specialized CSR's may be specialized in dealing with satisfied customers. In these embodiments, calls which are routed or bridged to the handling point 140, may be routed or bridged based on the satisfaction level.

In some of these embodiments, each specialized CSR at the handling point (a "configured supervisor") may be associated with at least one CSR communicating with the customers.

The handling point 140 may further be associated with a directory number (e.g. for a telephone set, a hunt group, an answer point, and the like.

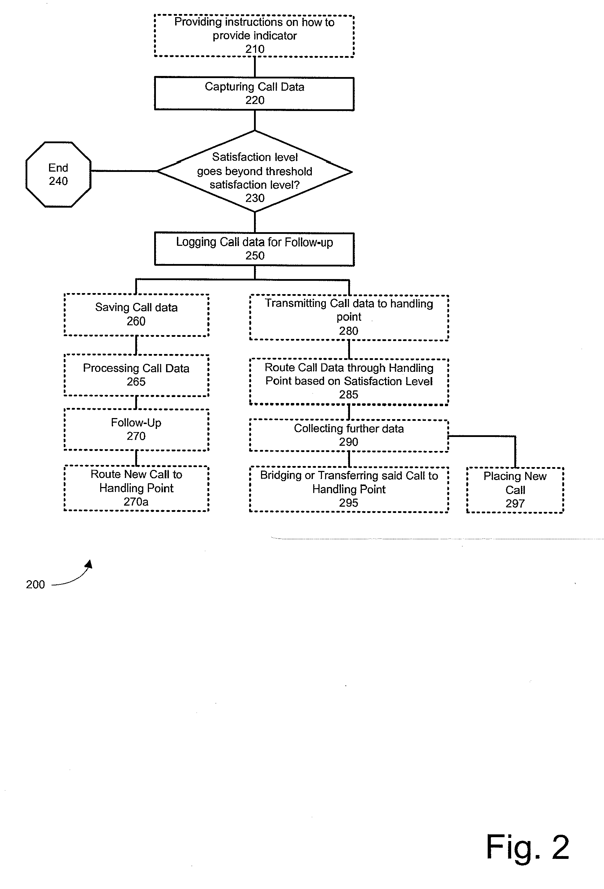

Attention is now directed to Figure 2, which depicts a method 200 of managing a call. Method 200 may be implemented within the system 50, and specifically within the switch 120. In some embodiments, portions of the method 200 may be implemented within the handling point 140. In some embodiments, the method 200 is initiated when a call between the first user 105 and the second user 115 is connected. In other embodiments, method 200 is initiated when the first user 105 calls the call center etc., and the switch 120 detects the incoming call. In yet further embodiments, the method 200 may be initiated when a call is placed to the first user 105 from the call center, for example if a call to the user 105 is initiated by a call queue.

When a connection is first established between the communication device 100 and the switch 120, at an optional step 210, instructions may be provided on how to provide an indicator of a satisfaction level. For example, on an incoming call to the call center, the call center system (e.g. the call answer unit 125) announces to the caller (i.e. the first user 105) that it supports this capability, prior to being connected to a call center representative (e.g. the second user 115) and identifies how to indicate a satisfaction level. If the first user 105 is to be provided with an option to indicate a single level of satisfaction, for example offence or a high level of satisfaction, they will be informed as to the manner of how to indicate that single level of satisfaction, for example by dialing "0", or by speaking a verbal queue (e.g. "I'm offended" or "I'm very satisfied"). If the first user 105 has an option to indicate a range of satisfaction levels, they will be informed as to the manner of how to indicate their given satisfaction level, for example by dialling "0" to "9", with "0" being a low level of satisfaction, and "9" being a high level of satisfaction. In other embodiments, a corresponding verbal queue may be provided. Furthermore, the first user 105 may be informed as to when they may provide the indicator. In some embodiments, they may provide the indicator during the call, while in other embodiments, the switch 120 may maintain the call for a period of time after the CSR (i.e. the second user 115) hangs up by introducing a short delay before terminating the call, and the first user 105 may provide the indicator during this time. In the latter embodiment, at least a portion of the instructions may be provided to the first user 105 again, after the CSR hangs up, for example a reminder of the option to indicate a satisfaction level.

At step 220, the call data capture unit 127 captures call data associated with an interaction on the call, for example an interaction between the first user 105 and the second user 115, including a satisfaction level associated with the call. In some embodiments, the call data capture unit 127 initiates the creation of the call information record 134 at step 220. In other embodiments, the call information 134 is created at a later step.

In some embodiments, at step 220, call data that is captured comprises time spent in hold queues, the number of hold queues that the call has been placed in, and/or the number of transfers that occur during the call. In other embodiments, at step 220, call data that is captured comprises an identifier or identifiers of successive users/CSRs involved in the call (e.g..a network address of each CSR, an employee number associated with each CSR, and the like), if the call proceeds through one or more transfers during handling by the system 50, to allow correlation of a satisfaction level associated with the call to employees/CSRs involved in the call.

At some point, however, it is presumed that the call between the communication device 100 and the communication device 110 has been connected by the switch 120: in other words, the first user 105 and the second user 115 are having a conversation (e.g. the caller has been connected to a CSR). The call data capture unit 127 may also be enabled to record the call or, alternatively, the call data capture unit 127 may be in communication with a call record unit (not depicted), which records the call and causes the recording to be stored in the database 132 or a memory of the switch 120. In these embodiments, the call record unit may be enabled to provide the call data capture unit 127 with a link to the recording or the recording itself.

At step 230, it is determined if the satisfaction level associated with the call goes beyond a threshold satisfaction level. In general, the satisfaction level associated with the call is initially assumed to be at a neutral level: the caller (i.e. the first user 105) is neither offended, nor is the caller extremely happy. Rather the caller is assumed to be content with the service being provided by the CSR. Similarly, the CSR is neither offended, nor extremely happy, but content with the interaction with the customer.

It may be determined, however, that the satisfaction level associated with the call has gone beyond a threshold satisfaction level if, during the call (or alternatively after the CSR hangs up, as described above), the first user 105 provides an indicator of a satisfaction level that is beyond a threshold satisfaction level. In embodiments where the first user 105 has been given an option of providing a single level of satisfaction, the threshold satisfaction level may comprise the single level of satisfaction that is available to the first user 105 for indication. In embodiments where the first user 105 has been given the option of indicating a satisfaction level from a range of satisfaction levels, an administrator of the system 50 may set at least one threshold satisfaction level.

For example, it may be desired to continue with the method 200 only for satisfaction levels associated with the call that are deemed to be out of a neutral zone (i.e. calls that have an associated satisfaction level that is either "low" or "high", or both). The administrator may then set the threshold satisfaction level appropriately. In embodiments where the first user 105 has an option of indicating satisfaction level by dialing "0" to "9" (with "0" being a low level of satisfaction, and "9" being a high level of satisfaction), a threshold satisfaction level for a low level of satisfaction may be set at "2", and a threshold satisfaction level for a high level of satisfaction may be set at "7". Embodiments are not to be limited, however, by the threshold satisfaction level and the threshold satisfaction level may be set at whatever value is desired by the administrator, or an entity with which the administrator is associated. In this manner, the degree to which the satisfaction level has gone beyond the threshold satisfaction level may also be determined.

In other embodiments, it may be determined that the satisfaction level associated with the call has gone beyond a threshold satisfaction level if, during the call, the first user 105 or the second user 115 hangs up abruptly. For example, an average call time may be stored at the switch 120, and if the call is significantly different than the average call time, it may be determined that the satisfaction level associated with call has gone beyond a threshold satisfaction level. In the context of this embodiment, "significantly different" is understood to mean that the call time is either less than a minimum threshold call time and/or less than the average call time, and/or greater than a maximum threshold call time, and/or greater than the average call time. The minimum threshold call time and the maximum threshold call time may be set by an administrator of the system 50.

Alternatively, a mood logic unit (not depicted) may be monitoring the call, to determine a mood of the first user 105 and/or the second user 115. An example of a mood logic unit may be found in US 6,411, 687 to Bohacek et al., which is incorporated herein by reference. In these embodiments, the mood logic unit may be enabled to detect a satisfaction level associated with the call, and notify the call data capture unit 127 if the mood of the first user 105 and/or the second user 115 exceeds a preset threshold. For example, the mood detector may be enabled to detect if the first user 105 and/or the second user 115 is annoyed, impatient, offended or, alternatively, pleased. When a mood level exceeds a preset threshold, it may be determined that the satisfaction level of the call has gone beyond a threshold satisfaction level. Further, the mood logic may be enabled to determine the degree to which the satisfaction level has gone beyond a threshold satisfaction level, for example via multiple threshold satisfaction levels. In other words there may a first threshold satisfaction level associated with "annoyed" and a second threshold satisfaction level associated with "very annoyed".

In some embodiments, if the satisfaction level associated with the call does not go beyond a threshold satisfaction level, the method of Figure 2 ends at step 240. In other words, both the first user 105 and the second user 115 hang up without incident. In some of these embodiments, the call data 129 associated with the call is saved (for example in the call information record 134) for future reference, while in other embodiments, the call data 129 is discarded.

If the satisfaction level associated with the call does go beyond a threshold satisfaction level, logging the call data 129 occurs at step 250. There are various possibilities for logging the call data 129. In some embodiments, a single possibility may be available, while in other embodiments, several of these possibilities may be available. In these embodiments, how to log the call may be determined by examining a previous call information record associated with the first user 105 and/or the second user 115. In these embodiments, the previous call information record may indicate if the first user 105, the second user 115 or both have been associated with a previous call in which the satisfaction level went beyond a threshold satisfaction level and, in some embodiments, to what degree. Indeed, how to log the call may depend on the degree to which the satisfaction level of the previous call went beyond a threshold satisfaction level, or the degree to which the present satisfaction level has gone beyond a threshold satisfaction level. In embodiments where the first user 105 was transferred between several CSR's within the system 50, during the previous call, the previous call information record may also store identifiers of the CSR'c involved in the previous call.

In some embodiments, logging the call data 129 comprises saving the call data 129, at step 260, for example in the call information record 134. In particular, a flag indicating that the call has gone beyond a threshold satisfaction level may be saved within the call information record 134. However in other embodiments, an indicator of a mood associated with the call may be saved and/or an indication of a satisfaction level 135 and/or the length of the call and/or the time spent in hold queues may be saved. In some embodiments, the call information record 134 may further be created at step 260. In these embodiments, the call information record 134 may be linked to other call information records associated with the first user 105.

Processing the call data 129 occurs at step 265, for example to extract the call data 129 from the call information record 134. In some of these embodiments, all call information records present in the database 132 (or a memory of the switch 120), are processed to determine which calls require follow-up, or which calls have priority for follow-up. In some embodiments, this processing occurs periodically, for example during a call evaluation or CSR evaluation period.

In other embodiments, only the call data associated with the call between the first user 105 and the second user 115 is processed, either by transmitting the call data 129 to the handling point 140 when a satisfaction level goes beyond a threshold satisfaction level, or by transmitting the trigger 141 to the handling point, the trigger 141 causing the handling point 140 to communicate with the database 132 to extract the call data 129 from the call information record 134 associated with the call. In these embodiments the trigger 141 comprises an identifier of the call, used to locate the call information record 134. In some embodiments, the call information record 134 is retrieved from the database 132 by the switch 120 (e.g. by the call data capture unit 127) and the call information record 134 is transmitted to the handling point 134, where the call data 129 is extracted from the call information record 134.

At step 270, the call is followed up. In some embodiments, the follow-up may comprise placing a new call to the first user 105, the second user 115 or both. In other embodiments, the follow-up may further comprise saving at least a portion of the call data 129 to an employee record of the second user 115 (as well as employee records of any other CSRs involved in the call, for example during transfers) and discussing the call with the second user 115 during an employee evaluation period.

In other embodiments, the follow-up may comprise routing a new call from the first user 105 to the handling point 140 (step 270a) and speaking with the first user 105. For example, in embodiments, where the call has ended abruptly (e.g. the second user 115 hung up on the first user 105), the first user 105 may be annoyed and may call back to resolve the problem that arose during the call. In these embodiments, if a new call from the first user 105 is received at the switch 120, the database 132 may be consulted to determine if there is a call information record 134 associated with the first user 105 (e.g. using the caller ID of the new call). If so, the call information record 134 may be processed to determine how to handle the new call. In some embodiments, any indication that a satisfaction level of the call went beyond a threshold satisfaction level may cause the switch 120 to route the new call to the handling point 140. In other embodiments, the degree to which a satisfaction level of the call went beyond a threshold satisfaction level may determine if the new call is routed to the handling point 140. In other embodiments, the new call is routed to the handling point 140 only if the new call occurs within a defined time period after the call, for example within a few hours or a few days after the call.

In other embodiments, logging the call data 129 comprises transmitting the call data to the handing point 140, at step 280, for example for viewing by the specialized CSR 145. In these embodiments, data which is viewed by the specialized CSR 145 may depend on the capabilities of the communication device 146. In some embodiments, at an optional step 285, the call data 129 may be routed through the handling point 140 based on the satisfaction level, as described above.

At step 290 further data may be collected. In some of the these embodiments, further data may be collected by bridging or transferring the call to the handling point 140, at step 295, so that the specialized CSR 145 may intervene in the call, for example to resolve a conflict that has arisen between the first user 105 and the second user 115. In other embodiments, where the call has been terminated, the specialized CSR 145 may place a new call to the first user 105, the second user 115 or both, to follow-up on the call. On termination of the call, or the new call, a record of the result of the interaction between the specialized CSR 145 and the first user 105 and/or the second user 115 may be saved, for example in the call information record 134. In these embodiments the result may be saved as an indication of satisfaction of the first user 105 and/or the second user 115 after the interaction with the specialized CSR 145.

Hence, the specialized CSR 145 may communicate with the first user 105, the second user 115, or both to discuss the issues that arose during the call in order to either bring the satisfaction level of the call to an acceptable satisfaction level, or takes steps that future calls have an appropriate satisfaction level. For example, the specialized CSR 145 may reprimand (or commend, as appropriate) the second user 115, or offer the first user 105 incentives to make up for an offending employee or a frustrating experience with the call center.

Those skilled in the art will appreciate that in some embodiments, the functionality of the switch 120 and the handling point 140 may be implemented using pre-programmed hardware or firmware elements (e.g., application specific integrated circuits (ASICs), electrically erasable programmable read-only memories (EEPROMs), etc.), or other related components. In other embodiments, the functionality of the switch 120 and the handling point 140 may be achieved using a computing apparatus that has access to a code memory (not shown) which stores computer-readable program code for operation of the computing apparatus. The computer-readable program code could be stored on a medium which is fixed, tangible and readable directly by these components, (e.g., removable diskette, CD-ROM, ROM, fixed disk, USB drive), or the computer-readable program code could be stored remotely but transmittable to these components via a modem or other interface device connected to a network (including, without limitation, the Internet) over a transmission medium. The transmission medium may be either a non-wireless medium (e.g., optical or analog communications lines) or a wireless medium (e.g., microwave, infrared, free-space optical or other transmission schemes) or a combination thereof.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of managing a call, comprising,
- capturing call data associated with an interaction on the call, said call data comprising a satisfaction level associated with said interaction; and
- logging said call data for follow-up by a handling point specialized in dealing with satisfaction levels, if said satisfaction level goes beyond a threshold satisfaction level.

2. The method of claim 1, wherein said call is between a first user and at least one second user, and said call data further comprises an identifier of said first user and an identifier of said at least one second user.

3. The method of claim 2, further comprising recording the call and wherein said call data further comprises at least one of said recording of the call and a link to said recording of the call.

4. The method of claim 2, wherein said identifier of said first user comprises a network identifier associated with the first user, said identifier of said at least one second user comprises an identifier associated with an employee of a contact center.

5. The method of claim 2, wherein said call data further comprises at least one of time that the call has spent in hold queues and the number of transfers that has occurred during the call.

6. The method of claim 1, wherein said logging comprises saving said call data.

7. The method of claim 1, wherein said follow-up comprises collecting of further data associated said satisfaction level.

8. The method of claim 7, wherein said logging comprises forwarding said call data to a handling point, and said collecting comprises placing a second call to a network identifier associated with the call.

9. The method of claim 7, wherein said logging comprises redirecting the call to a handling point, and said follow-up comprises speaking to a user associated with the call.

10. The method of claim 7, wherein said logging comprises bridging the call with a handling point, and said follow-up comprises speaking to at least one user associated with the call.

11. The method of claim 1, wherein said satisfaction level goes beyond a threshold satisfaction level when an employee of an entity engaged in the call hangs up prior to a customer engaged in the call.

12. The method of claim 11, wherein said follow-up comprises redirecting a new call from a network address associated with said call to a handling point, if said call is terminated when said employee hangs up.

13. The method of claim 12, wherein said redirecting a new call from a network address associated with said call to said handling point occurs only if said new call arrives within a specified time period after the call is terminated.

14. The method of claim 11, wherein said follow-up comprises initiating a new call to a network address associated with the call, if said call is terminated when said employee hangs up

15. The method of claim 1, wherein said satisfaction level comprises an indicator of a satisfaction level of a user associated with the call.

16. The method of claim 15, wherein said indicator comprises at least one of a DTMF tone and a verbal indicator.

17. The method of claim 15, further comprising providing said user with instructions on how said user may provide said indicator.

18. The method of claim 1, further comprising collecting further data associated with said satisfaction level.

19. The method of claim 1, further comprising routing said call data through a handling point based on said satisfaction level.

20. A switch for managing a call, comprising,
- a routing unit for routing the call;
- a call answer unit for answering the call; and
- a call data capture unit for:
- capturing call data associated with an interaction on the call, said call data comprising a satisfaction level associated with said interaction; and
- logging said call data for follow-up by a handling point specialized in dealing with satisfaction levels, if said satisfaction level goes beyond a threshold satisfaction level.
